**Europäisches Patentamt**

**European Patent Office**

**Office européen des brevets**

(19)

(11) Veröffentlichungsnummer : **0 368 095 B1**

## (12) EUROPÄISCHE PATENTSCHRIFT

(45) Veröffentlichungstag der Patentschrift :
**17.06.92 Patentblatt 92/25**

(51) Int. Cl.⁵ : **B65B 51/30**

(21) Anmeldenummer : **89119974.7**

(22) Anmeldetag : **27.10.89**

(54) **Schlauchbeutelmaschine.**

(30) Priorität : **07.11.88 DE 3837709**

(43) Veröffentlichungstag der Anmeldung :
**16.05.90 Patentblatt 90/20**

(45) Bekanntmachung des Hinweises auf die
Patenterteilung :
**17.06.92 Patentblatt 92/25**

(84) Benannte Vertragsstaaten :
**DE ES FR GB**

(56) Entgegenhaltungen :
**DE-A- 2 224 407**
**DE-B- 1 179 494**
**US-A- 3 027 695**
**US-A- 3 538 676**

(73) Patentinhaber : **ROVEMA**
**VERPACKUNGSMASCHINEN GMBH**
**Industriegebiet**
**W-6301 Fernwald-Annerod (DE)**

(72) Erfinder : **Schneider, Werner**
**Grüner Weg 1a**
**W-6331 Hohenahr (DE)**

(74) Vertreter : **Missling, Arne, Dipl.-Ing.**
**Patentanwalt Bismarckstrasse 43**
**W-6300 Giessen (DE)**

## Beschreibung

Die Erfindung bezieht sich auf eine Schlauchbeutelmaschine mit zumindest zwei Querschweißbacken, welche an gegenüberliegenden Seiten eines zu verschweißenden Folienschlauchs angeordnet sind und jeweils umlaufend an einer geschlossenen, im wesentlichen kreisförmiger und an der dem Schlauchbeutel zugewandten Seite geradlinig ausgebildeten Kurvenbahn so geführt sind, daß die Querschweißbacken gegeneinander anlegbar und voneinander trennbar sind.

Eine Schlauchbeutelmaschine der eingangs genannten Art ist beispielsweise aus der DE-OS 22 24 407 bekannt. Bei dieser Schlauchbeutelmaschine erfolgt kombiniert sowohl eine Befüllung als auch eine Verschweißung der Schlauchbeutel, wobei mittels der Querschweißbacken jeweils gleichzeitig die obere Querschweißnaht eines bereits gefüllten Schlauchbeutels und die untere Querschweißnaht eines noch leeren Schlauchbeutels erzeugt werden. Der obere Schlauchbeutel, dessen untere Querschweißnaht bei dieser Gelegenheit ausgebildet wird, wird nachfolgend durch ein Füllrohr mit zu verpackendem Gut befüllt. Die Kurvenbahn bewirkt bei dieser Schlauchbeutelmaschine, daß die Querschweißbacken zyklisch an die Bewegung und Befüllung des Schlauchbeutels angepaßt, gegen diesen angepreßt und nachfolgend von diesem getrennt werden. Die geschlossene Ausgestaltung der Kurvenbahn erlaubt eine umlaufende Bewegung der Querschweißbacken, so daß es insbesondere möglich ist, den Folienschlauch während des Schweißvorganges zusammen mit dem Querschweißbacken weiterzubewegen.

Bei nicht rotierenden Querschweißbacken, d.h. bei Querschweißbacken, die linear gegeneinander verfahren werden, ist es bereits bekannt (US-A-3538376, US-A-3027695), einen Luftausdrücker unterhalb der Schweißbacken anzuordnen, der vor dem eigentlichen Quersiegelvorgang den Behälter zu beiden Seiten ergreift und Luft aus dem Behälter auspreßt. Diese bekannten Luftausdrücker lassen sich jedoch nicht bei umlaufenden Quersiegelbacken einsetzen, da hier die Luftausdrücker relativ zur Schweißbeutelwandung bewegt werden.

Bei den bekannten Schlauchbeutelmaschinen mit rotierenden Querschweißbacken erweist es sich als problematisch, gezielt eine bestimmte Luftmenge in dem Beutel zusammen mit dem zu verpackenden Gut einzuschließen. Da die Querschweißbacken bei ihrer Anlage gegen den Folienschlauch den Austritt von Luft oder Gasen aus dem Folienschlauch, bedingt durch den Anpreßdruck, welcher zum Schweißen erforderlich ist, verhindern, erfolgt der Einschluß der Gasmenge eher zufällig in Abhängigkeit von der jeweiligen Gestalt des Schlauchbeutels. Da unter bestimmten Fertigungsbedingungen das Gewicht eines bereits fertiggestellten Schlauchbeutels einen zu verschweißenden Folienschlauch belastet und diesen nach unten zieht, wird dieser, abhängig von dem Gewicht des jeweils abzufüllenden Gutes unterschiedlich stark nach unten gezogen und gestreckt, wodurch auch die Menge des eingeschlossenen Gases geringer ist, als bei einem Folienschlauch, welcher sich in dem Moment, in welchem die Querschweißbacken an ihn angenähert werden, infolge eines geringeren Zuges weiter ausbauchen kann.

Der Erfindung liegt die Aufgabe zugrunde, eine Schlauchbeutelmaschine der eingangs genannten Art zu schaffen, welche bei einfachem Aufbau und betriebssicherer Wirksamkeit eine gezielte Beeinflussung der in einem Beutel einzuschließenden Gasmenge ermöglicht.

Erfindungsgemäß wird die Aufgabe dadurch gelöst, daß in Bewegungsrichtung vor jeder Querschweißbacke ein zusammen mit dieser mittels der Kurvenbahn bewegbarer Auspreßkörper vorgesehen ist, welcher gegen den Schlauchbeutel, diesen zumindest über einen Teil seiner Breite berührend, anpreßbar ist, daß der Auspreßkörper zum einen eine Länge aufweist, welche im wesentlichen der Länge des geradlinigen Bereichs der Kurvenbahn entspricht und zum anderen mit im wesentlichen gleichmäßig über die Breite des Auspreßkörpers verteilten Anlagebereichen versehen ist.

Die erfindungsgemäße Schlauchbeutelmaschine zeichnet sich durch eine Reihe erheblicher Vorteile aus. Durch den vor der Querschweißbacke angeordneten Anpreßkörper ist es möglich, den Schlauchbeutel in einem Verfahrenszustand zu beeinflussen, in welchem die Querschweißbacken noch keine Klemmung und keinen Anpreßdruck ausüben. Es ist somit möglich, mittels des Auspreßkörpers jeweils eine definierte Luftmenge aus dem zu verschweißenden Bereich eines Folienschlauches auszupressen bzw. in diesen einzudrücken. Beim Auspressen des Gases oder der Luft aus dem Schlauchbeutel erweist es sich als besonders vorteilhaft, daß der Auspreßkörper den Schlauchbeutel nur über einen Teil seiner Breite berührt, so daß jeweils mehrere einzelne Luftkanäle ausgebildet werden, durch welche eine Durchströmung möglich ist.

Durch die erfindungsgemäße Schlauchbeutelmaschine ist es beispielsweise möglich, sehr große Beutel herzustellen, welche mit einer empfindlichen Ware gefüllt sind und ein ausreichendes, vorbestimmbares Luftvolumen enthalten, welches als Polster wirkt und die Ware vor Beschädigungen schützt. Erfindungsgemäß ist es möglich, das Luftvolumen definiert vorzubestimmen, so daß das Gesamtvolumen des fertigen Schlauchbeutels eine weitere Verarbeitung ermöglicht, beispielsweise ein Stapeln oder ein weiteres Verpacken des gefüllten Beutels.

In einer vorteilhaften Weiterentwicklung der Erfindung ist vorgesehen, daß der Anpreßkörper einen Träger umfaßt, dessen erstes Ende gelenkig an der Querschweißbacke gelagert ist und dessen anderes Ende mit einer Führungsrolle versehen ist, welche in der Kurvenbahn geführt ist. Durch diese Ausgestaltung wird eine exakte Bewegungsbahn des Auspreßkörpers vorbestimmt, wobei zusätzlich, bedingt durch die starre Kurvenbahn eine gezielte Anpressung des Auspreßkörpers gegen den Folienschlauch sichergestellt ist. Zugleich erfolgt eine zugeordnete, gleichmäßige Bewegung des Auspreßkörpers mit der Schweißbacke, da dieser an die Schweißbacke gekoppelt ist. Der Auspreßkörper bewegt sich somit stets synchron mit der jeweiligen Querschweißbacke.

Die Querschweißbacke ist günstigerweise mittels zweier Führungsrollen an der Kurvenbahn geführt. Ein Verkippen oder Verkanten wird somit ausgeschlossen.

Dadurch daß der Auspreßkörper eine Länge aufweist, welche im wesentlichen der Länge des geradlinigen Bereichs der Kurvenbahn entspricht, wird die Anlagefläche des Auspreßkörpers gegen das Material des Schlauchbeutels vergrößert, wobei insbesondere Beschädigungen des Schlauchbeutels, hervorgerufen beispielsweise durch Relativbewegungen zwischen dem Auspreßkörper- und dem Schlauchmaterial, vermieden werden.

Um zu erreichen, daß das aus dem Folienschlauch auszupressende Gas ungehindert und gleichmäßig entweicht, kann es sich als besonders günstig erweisen, wenn der Auspreßkörper zur Anlage an den Folienschlauch und zum Auspressen von Gasen aus dem Folienschlauch mit im wesentlichen gleichmäßig über die Breite des Auspreßkörpers verteilten Anlagebereichen versehen ist. Die Anlagebereiche sind bevorzugterweise durch eine quer zu dem Folienschlauch angeordnete Spiralfeder ausgebildet. Diese Ausgestaltungsform weist weiterhin den Vorteil auf, daß eine gewisse Abfederung oder Elastizität möglich ist, um eine Beschädigung des Folienschlauches zu vermeiden. In günstiger Weise ist die Spiralfeder als Zugfeder ausgestaltet und in einem vorgespannten Zustand montiert, so daß eine Verklemmung des Schlauchmaterials zwischen nebeneinanderliegenden Windungen der Feder vermieden wird.

In günstiger Weise ist erfindungsgemäß vorgesehen, daß mehrere zueinander parallele Spiralfedern an dem Träger angeordnet sind. Dadurch erhöht sich die Zahl der Kontaktpunkte zu dem Folienschlauch und die zu erzielende Auspreßwirkung. Die Spiralfedern sind bevorzugterweise quer zu dem Folienschlauch angeordnet.

Um sicherzustellen, daß die Anpreßkörper in dem Arbeitsschritt, in welchem sie gegen den Folienschlauch angelegt und gegen ihn gepreßt werden, den Folienschlauch nicht beschädigen, kann es besonders günstig sein, wenn der Auspreßkörper an seinem der Querschweißbacke abgewandten, vorderen Endbereich zur Mitte der Kurvenbahn hin, d. h. von dem Schlauch weg abgewinkelt ist. Es ist somit insbesondere bei einer Kurvenbahn geringen Durchmessers möglich, den Auspreßkörper gleichmäßig gegen den Folienschlauch anzulegen.

Weiterhin kann es erfindungsgemäß günstig sein, wenn an der Kurvenbahn zwei Querschweißbacken und zwei Auspreßkörper angeordnet sind. Auf diese Weise läßt sich die Umlaufgeschwindigkeit der Querschweißbacken und der Auspreßkörper verringern, da bei jedem Arbeitstakt nur ein halber Umlauf um die Kurvenbahn erforderlich ist. Insbesondere bei Schlauchbeuteln geringer Länge ist auf diese Weise eine erhebliche Vereinfachung der Schlauchbeutelmaschine möglich.

Zur sicheren Führung der Querschweißbacken und der Auspreßkörper kann es weiterhin vorteilhaft sein, wenn an jedem seitlichen Endbereich der Querschweißbacke und des Auspreßkörpers eine Kurvenbahn vorgesehen ist, d. h. die Führung an den jeweiligen äußeren Endbereichen erfolgt. Die Gefahr einer Verkippung oder Verkantung wird somit wesentlich verringert.

Der Antrieb der Querschweißbacken und der damit verbundenen Auspreßkörper erfolgt bevorzugterweise über einen drehbaren Antriebskörper, welcher zentrisch in der Mitte der Kurvenbahn gelagert ist. Da die Querschweißbacke mit dem Auspreßkörper verbunden ist, ist es ausreichend, wenn der Antriebskörper jeweils nur mit der Querschweißbacke antriebsverbunden ist.

Günstigerweise sind die gegenüberliegenden Querschweißbacken, Auspreßkörper und Kurvenbahnen jeweils symmetrisch ausgebildet, um eine beidseitige, gleichmäßige Behandlung eines Schlauchbeutels zu gewährleisten.

Im folgenden wird die Erfindung anhand eines Ausführungsbeispiels in Verbindung mit der Zeichnung beschrieben. Dabei zeigt:

Fig. 1 eine schematische Seitenansicht eines Ausführungsbeispiels der erfindungsgemäßen Schlauchbeutelmaschine;

Fig. 2 eine Teil-Seitenansicht einer Querschweißbacke und eines erfindungsgemäßen Auspreßkörpers;

Fig. 3 eine Draufsicht auf die in Fig. 2 gezeigte Anordnung; und

Fig. 4 eine Schnittansicht entlang der Linie IV-IV von Fig. 3.

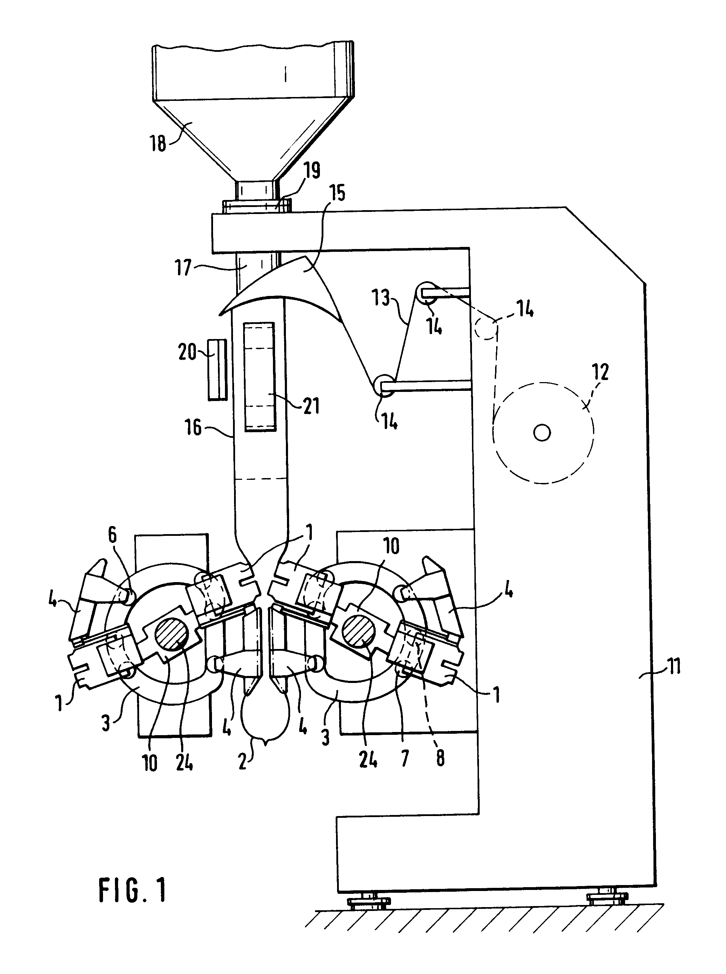

In Fig. 1 ist in der Seitenansicht in schematischer Weise ein Ausführungsbeispiel einer erfindungsgemäßen Schlauchbeutelmaschine dargestellt. Diese umfaßt ein Gestell 11, an welchem eine Rolle 12 gelagert ist, welche aus einem Folienmaterial oder einem ähnlichen Material besteht, aus welchem der nachfolgend auszubildende Schlauchbeutel 2 hergestellt werden soll. Die von der Rolle 12 abgeführte Folienbahn 13 wird über Umlenkrollen 14 einer Formschulter 15 zugeführt, mittels derer die Folienbahn 13 schlauchförmig umgelenkt wird. Zentrisch zu dem nunmehr ausgebildeten Folienschlauch 16 ist ein Füllrohr 17 angeordnet, welches an seiner Oberseite in einen Behälter übergeht, in welchem das abzufüllende Gut bevorratet ist. Am Übergang zwischen dem Füllrohr 17 und dem Behälter 18 ist eine Verschlußeinrichtung 19 vorgesehen, um das Füllgut wahlweise dem Füllrohr 17 zuzuführen.

Unterhalb der Formschulter 15 ist eine Längsschweißbacke 20 angeordnet, mittels derer die Längsverschweißung oder Versiegelung des Folienschlauchs 16 erfolgt. Weiterhin sind im Bereich des Füllrohres 17 Antriebsbänder 21 vorgesehen, durch welche der Folienschlauch 16 transportiert wird.

Am unteren Bereich der Schlauchbeutelmaschine sind beidseitig zu dem Folienschlauch 16 bzw. dem auszubildenden Schlauchbeutel 2 Kurvenbahnen 3 ausgebildet, an welchen Querschweißbacken 1 geführt sind. Die Kurvenbahnen 3 sind jeweils im wesentlichen kreisförmig ausgebildet und weisen an der dem Schlauchbeutel 2 zugewandten Seite einen geradlinigen Bereich auf.

Die Querschweißbacken 1 dienen zur Ausbildung zweier zueinander paralleler Querschweißnähte oder Quersiegelnähte, wobei jeweils eine Querschweißnaht den oberen Abschluß eines unteren Schlauchbeutels bildet, während die andere Querschweißnaht den unteren Endbereich eines nachfolgenden Schlauchbeutels bildet.

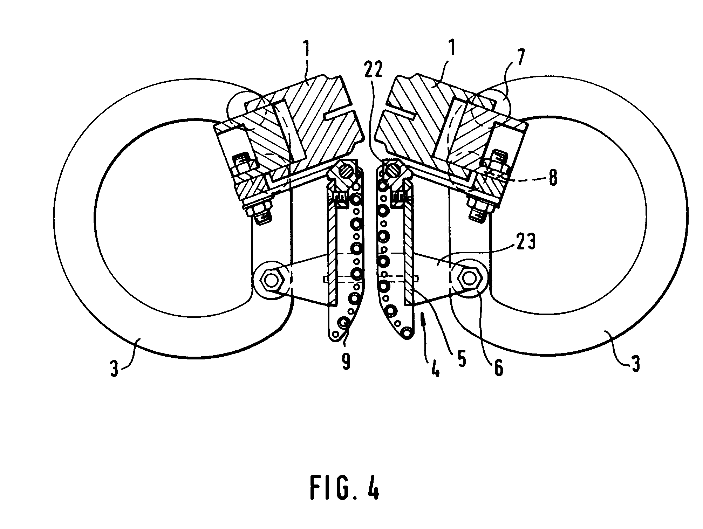

Den Querschweißbacken 1 sind erfindungsgemäß jeweils Auspreßkörper 4 vorgeordnet, welche im einzelnen im Zusammenhang mit Fig. 4 beschrieben werden.

In Fig. 4 ist eine schematische Seiten-Schnittansicht eines Teils der in Fig. 1 gezeigten Anordnung dargestellt. Dabei ist zu erkennen, daß jede der Querschweißbacken 1 an ihrem unteren Endbereich Führungsrollen 7, 8 aufweist, welche in der Kurvenbahn 3 geführt sind. Die Querschweißbacken sind in bekannter Weise doppelt ausgebildet, um zwei zueinander parallele Querschweißnähte zu erzeugen.

Aus der in Fig. 1 dargestellten Anordnung ergibt sich, daß die in Fig. 4 rechts dargestellte Querschweißbacke sich entlang der Kurvenbahn 3 im Gegenuhrzeigersinn bewegt, während die linke Querschweißbacke im Uhrzeigersinn entlang der Kurvenbahn 3 geführt wird.

An den in Bewegungsrichtung gesehen vorderen Endbereichen der Querschweißbacken 1 sind diese bei 22 mit einem Träger 5 des Auspreßkörpers 4 gelenkig verbunden. Das der Querschweißbacke 1 abgewandte Ende des Trägers 5 ist mit einem Fuß 23 verbunden, an dessen Ende eine Führungsrolle 6 drehbar gelagert ist, welche ebenfalls in der Kurvenbahn 3 geführt ist. Es ist somit sichergestellt, daß sich die Querschweißbacken 1 jeweils zusammen mit dem mit ihnen verbundenen Auspreßkörper 4 entlang der Kurvenbahn 3 bewegen.

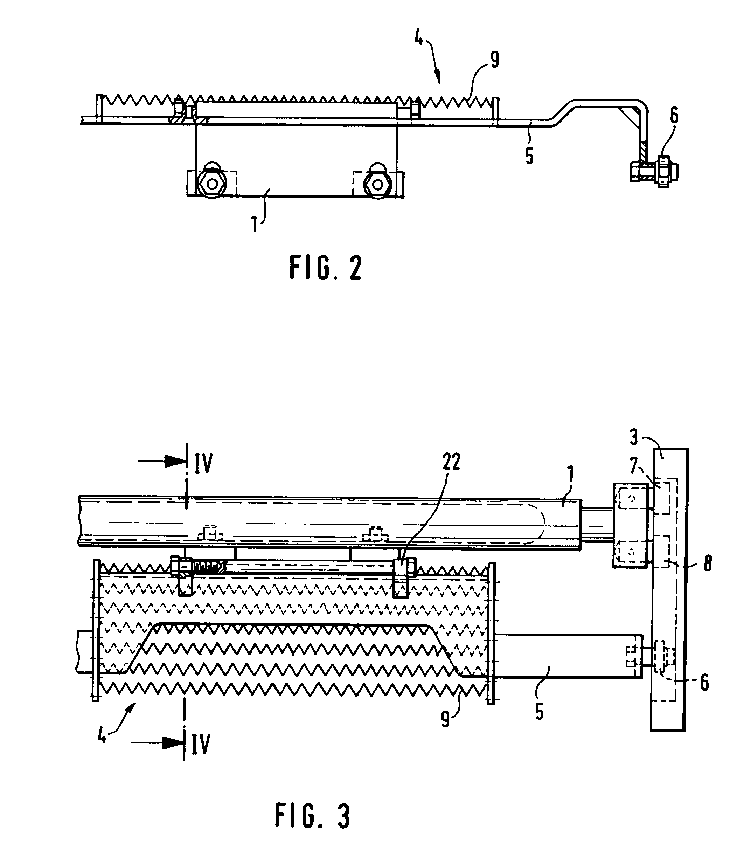

Die Fig. 2 und 3 zeigen, jeweils in schematischer, vereinfachter Darstellung, eine Seitenansicht und eine Draufsicht auf eine Querschweißbacke 1 und den zugeordneten Auspreßkörper 4.

Aus den Fig. 2 und 3 ist zu erkennen, daß jeweils die seitlichen Endbereiche sowohl der Querschweißbacke 1 als auch des Auspreßkörpers 4 mit Führungsrollen 6, 7, 8 versehen sind, welche in seitlichen Kurvenbahnen 3 geführt sind. Auf jeder Seite der Schlauchbeutelmaschine sind somit zwei Kurvenbahnen 3 vorgesehen.

An dem Träger 5 des Auspreßkörpers 4 sind mehrere, sich parallel zu der Querschweißbacke 1 erstreckende Spiralfedern 9 befestigt, welche unter einer Vorspannung gehalten sind und zur Anlage an den Folienschlauch bzw. den Schlauchbeutel dienen. Wie aus den Fig. 2 und 3 ersichtlich ist, weist der Auspreßkörper 4 eine größere Länge auf, als die wirksame Länge der Querschweißbacke 1, um somit ein gleichmäßiges Auspressen von Luft aus einem Folienbeutel sicherzustellen.

In Fig. 4 ist dargestellt, daß das, in Bewegungsrichtung gesehen, vordere Ende des Auspreßkörpers 4 von der Mittelebene des Schlauchbeutels 2 weg, d. h. in Richtung auf den unteren Teil der Kurvenbahn 3 hin, abgewinkelt ist. Diese Abwinkelung vereinfacht die Annäherung des Auspreßkörpers an einen Schlauchbeutel 2 und verhindert Beschädigungen desselben.

Die Länge des Auspreßkörpers 4 entspricht im wesentlichen der Länge des geradlinigen Bereichs der Kurvenbahn 3, so daß, wie in Fig. 4 gezeigt, die Auspreßwirkung der Auspreßkörper dann am größten ist, wenn die Querschweißbacken 1 sich in einem Arbeitsablauf kurz vor der Annäherung an den Folienschlauch 16 befinden.

Bedingt durch die insbesondere aus Fig. 2 ersichtliche bügelförmige Ausgestaltung des Auspreßkörpers 4 ist gewährleistet, daß der Auspreßkörper eine ausreichende Elastizität aufweist, um zum einen einen ausreichenden Anpreßdruck gegen den Schlauchbeutel sicherzustellen, zum anderen jedoch eine Beschädigung desselben zu vermeiden.

In Fig. 1 ist dargestellt, daß bei dem erfindungsgemäßen Ausführungsbeispiel der Schlauchbeutelmaschine an jeder Kurvenbahn 3 zwei Querschweißbacken 1 und zwei Auspreßkörper 4 vorgesehen sind, welche, bezogen auf die Drehrichtung, jeweils um im wesentlichen 180° zueinander versetzt sind. Erfindungsgemäß ist es somit möglich, die Bewegungsgeschwindigkeit der Querschweißbacken 1 und der Auspreßkörper 4 zu verringern, da diese jeweils nur im jeweiligen zweiten Arbeitstakt zur Herstellung eines Schlauchbeutels verwendet werden.

Zentrisch zu jeder Kurvenbahn 3 ist jeweils eine Welle 24 gelagert, mit welcher ein Antriebskörper 10 verbunden ist, dessen Enden jeweils mit den Querschweißbacken 1 antriebsverbunden sind. Durch eine Drehung der Welle 24 und somit des Antriebskörpers 10 erfolgt eine Bewegung der Querschweißbacken 1 und der mit diesen gekoppelten Auspreßkörper 4 entlang der Kurvenbahnen 3.

Aus Fig. 1 ist weiterhin ersichtlich, daß bei dem gezeigten Ausführungsbeispiel die Kurvenbahnen 3, die Auspreßkörper 4 und die Querschweißbacken 1 jeweils symmetrisch zur Mittelebene der Schlauchbeutel 2 ausgebildet sind.

Die Erfindung ist nicht auf das gezeigte Ausführungsbeispiel beschränkt, vielmehr ergeben sich für den Fachmann im Rahmen der Erfindung vielfältige Abwandlungsmöglichkeiten. Insbesondere ist es möglich, die Auspreßkörper in vielfältiger Weise auszugestalten, beispielsweise als Platten aus elastischem Material oder ähnlichem.

## Patentansprüche

1. Schlauchbeutelmaschine mit zumindest zwei Querschweißbacken (1), welche an gegenüberliegenden Seiten eines zu verschweißenden Folienschlauchs (16) angeordnet sind und jeweils umlaufend an einer geschlossenen, im wesentlichen kreisförmigen und an der dem Schlauchbeutel (2) zugewandten Seite geradlinig ausgebildeten Kurvenbahn (3) so geführt sind, daß die Querschweißbacken (1) gegeneinander anlegbar und voneinander trennbar sind, dadurch gekennzeichnet, daß in Bewegungsrichtung vor jeder Querschweißbacke (1) ein zusammen mit dieser mittels der Kurvenbahn (3) bewegbarer Auspreßkörper (4) vorgesehen ist, welcher gegen den Schlauchbeutel (2), diesen zumindest über einen Teil seiner Breite berührend, anpreßbar ist, daß der Auspreßkörper (4) zum einen eine Länge aufweist, welche im wesentlichen der Länge des geradlinigen Bereichs der Kurvenbahn (3) entspricht und zum anderen mit im wesentlichen gleichmäßig über die Breite des Auspreßkörpers (4) verteilten Anlagebereichen versehen ist.

2. Schlauchbeutelmaschine nach Anspruch 1, dadurch gekennzeichnet, daß der Auspreßkörper (4) einen Träger (5) umfaßt, dessen erstes Ende gelenkig an der Querschweißbacke (1) gelagert ist und dessen anderes Ende mit einer Führungsrolle (6) versehen ist, welche in der Kurvenbahn (3) geführt ist.

3. Schlauchbeutelmaschine nach Anspruch 1 oder 2, dadurch gekennzeichnet, daß die Querschweißbacke (1) mittels zweier Führungsrollen (7, 8) an der Kurvenbahn (3) geführt ist.

4. Schlauchbeutelmaschine nach einem der Ansprüche 1 bis 3, dadurch gekennzeichnet, daß die Anlagebereiche durch eine quer zu dem Folienschlauch (16) angeordnete Spiralfeder (9) ausgebildet sind.

5. Schlauchbeutelmaschine nach Anspruch 4, dadurch gekennzeichnet, daß die Spiralfeder (9) als Zugfeder ausgestaltet ist.

6. Schlauchbeutelmaschine nach Anspruch 4 oder 5, dadurch gekennzeichnet, daß mehrere zueinander parallele Spiralfedern (9) vorgesehen sind.

7. Schlauchbeutelmaschine nach einem der Ansprüche 1 bis 6, dadurch gekennzeichnet, daß der Auspreßkörper (4) an seinem der Querschweißbacke (1) abgewandten, vorderen Endbereich zur mitte der Kurvenwand (3) hin abgewinkelt ist.

8. Schlauchbeutelmaschine nach einem der Ansprüche 1 bis 7, dadurch gekennzeichnet, daß an der Kurvenbahn (3) zwei Querschweißbacken (1) und zwei Auspreßkörper (4) angeordnet sind.

## Claims

1. A tubular bag machine with at least two lateral sealing jaws (1) which are arranged on opposite sides of a foil tube (16) to be sealed and which, rotating on a closed, substantially circular curved track (3) formed so as to be straight on the side facing the tubular bag (2), are guided in such a way that the lateral sealing jaws (1) can be laid against each other and separated from each other, characterised in that in the direction of movement, upstream of each lateral sealing jaw (1), a discharge element (4) is provided which is movable with the latter by means of the curved track (3) and which can be pressed against the tubular bag (2), contacting the latter at least over part of its breadth, in that the discharge element (4) on the one hand is of a length which substantially corresponds to the length of the straight region of the curved track (3) and on the other is provided with contact regions distributed substantially uniformly over the breadth of the discharge element (4).

2. A tubular bag machine according to claim 1, characterised in that the discharge element (4) comprises

5

a carrier (5), the first end of which is mounted on the lateral sealing jaw (1) in an articulated manner and the other end of which is provided with a guide roller (6) which is guided in the curved track (3).

3. A tubular bag machine according to claim 1 or 2, characterised in that the lateral sealing jaw (1) is guided on the curved track (3) by means of two guide rollers (7, 8).

4. A tubular bag machine according to any one of claims 1 to 3, characterised in that the contact regions are formed by a helical spring (9) arranged transversely to the foil tube (16).

5. A tubular bag machine according to claim 4, characterised in that the helical spring (9) is designed as a tension spring.

6. A tubular bag machine according to claim 4 or 5, characterised in that several parallel helical springs (9) are provided.

7. A tubular bag machine according to any one of claims 1 to 6, characterised in that the discharge element (4) is angled off towards the centre of the curved wall (3) on its front end region facing away from the lateral sealing jaw (1).

8. A tubular bag machine according to any one of claims 1 to 7, characterised in that two lateral sealing jaw (1) and two discharge elements (4) are arranged on the curved track (3).


**Revendications**

1. Machine pour la fabrication et le remplissage de sachets tubulaires, comportant au moins deux longerons transversaux de soudage (1) qui sont disposés sur les côtés opposés d'un tube flexible fait d'une feuille (16) à souder, et sont guidés chacun sur une piste courbe fermée (3), qui est principalement de forme circulaire, et rectiligne sur sa face tournée vers le sachet tubulaire (2), de telle façon que les longerons transversaux de soudage (1) peuvent s'appuyer l'un contre l'autre et se séparer l'un de l'autre, caractérisée en ce qu'il est prévu avant chacun des longerons transversaux de soudage (1), dans la direction de leur mouvement, un organe de pressage (4), pouvant se déplacer en même temps que ceux-ci au moyen de la piste courbe (3), et pouvant être poussé contre le sachet tubulaire (2), en touchant ce dernier au moins sur une partie de sa largeur, en ce que l'organe de pressage (4), d'une part, présente une longueur correspondant essentiellement à la longueur de la zone rectiligne de la piste courbe (3) et, d'autre part, comporte des zones de contact réparties essentiellement de façon régulière sur la largeur de l'organe de ce pressage (4).

2. Machine pour la fabrication et le remplissage de sachets tubulaires suivant la revendication 1, caractérisée en ce que l'organe de pressage (4) comporte un support (5) dont la première extrémité est montée articulée sur le longeron transversal de soudage (1), et dont l'autre extrémité est munie d'un galet de guidage (6), guidé dans la piste courbe (3).

3. Machine pour la fabrication et le remplissage de sachets tubulaires suivant la revendication 1 ou la revendication 2, caractérisée en ce que le longeron transversal de soudage (1) est guidé sur la piste courbe (3) au moyen de deux galets de guidage (7, 8).

4. Machine pour la fabrication et le remplissage de sachets tubulaires suivant l'une quelconque des revendications 1 à 3, caractérisée en ce que les zones de contact sont formées par un ressort spiral (9), disposé en travers du tube flexible fait d'une feuille (16).

5. Machine pour la fabrication et le remplissage de sachets tubulaires suivant la revendication 4, caractérisée en ce que le ressort spiral (9) est réalisé sous la forme d'un ressort de traction.

6. Machine pour la fabrication et le remplissage de sachets tubulaires suivant la revendication 4 ou la revendication 5, caractérisée en ce que plusieurs ressorts spirale (9), parallèles les uns aux autres, sont prévus.

7. Machine pour la fabrication et le remplissage de sachets tubulaires suivant l'une quelconque des revendications 1 à 6, caractérisée en ce que l'organe de pressage (4), dans sa zone d'extrémité opposée au longeron transversal de soudage (1), est plié en direction du centre de la piste courbe (3).

8. Machine pour la fabrication et le remplissage de sachets tubulaires suivant l'une quelconque des revendications 1 à 7, caractérisée en ce que, sur la piste courbe (3), sont disposés deux longerons transversaux de soudage (1) et deux organes de pressage (4).

FIG. 1

FIG. 2

FIG. 3

FIG. 4